# EUROPEAN PATENT SPECIFICATION

(11) **EP 1 965 591 B1**
(45) Date of publication and mention of the grant of the patent: **02.04.2014**
(21) Application number: 07021900.1
(22) Date of filing: 12.11.2007
(51) Int. Cl.: H04N 21/235, H04N 21/236, H04N 21/434, H04N 21/435, H04N 21/8352

(54) **A method for program component multiplexing and identification**
Verfahren für Multiplexing und Identifikation einer Programmkomponente
Procédé pour multiplexage et identification de composant de programme

(30) Priority: 14.11.2006 CN 200610118328
(43) Date of publication of application: 03.09.2008
(73) Proprietor: Spreadtrum Communications (Shanghai) Co., Ltd., Zhangjiang High Tech Park Podong District Shanghai 201203 (CN)
(72) Inventor: Ding, Yaqiang, 200062 Shanghai (CN); Lin, Jiang, 201102 Shanghai (CN); Lin, Fu-Huei, Cupertino, CA 95014 (US)
(74) Representative: Lang, Johannes

(56) References cited:
- EP-A- 1 022 900
- EP-A- 1 363 439
- WO-A-2004/028156
- US-A1- 2003 053 476

## Description

### FIELD

This invention generally relates to proper identification of video, audio or data program components from a signal stream, more particularly, relates to a method for program component multiplexing and identification.

### BACKGROUND

At present, the techniques on program components detection and identification are mainly provided by Thomson Inc. For example, CN 1222168C and CN 1725843C have disclosed a method for processing multiplex signals containing multiple programs and information associated with the programs, comprising the following steps: receiving the multiplex signals; identifying the signal that has the predetermined Signal Component Identification (SCID) from the multiplex signals, the SCID is associated with respective program components of respective programs in the multiplex signals; programming a plurality of programmable matched filters with the SCIDs identified from the multiplex signals; filtering the multiplex signals by the plurality of programmable matched filters; and processing the respective components of the respective programs by utilizing the SCID based on the step of filtering.

Though the method mentioned above can identify video, audio or data program components from the signal stream, matched filters are needed to be programmed with the SCID identified from the multiplex signals first and the programmed matched filter will be used to process respective components of the respective programs. Therefore, the mentioned processing procedure described therein is quite complicated, and the receiver can not identify the program components when the program components identification information is missing or incorrect due to packet loss of the transfer channel.

EP 1 022 900 A1 discloses a data multiplexing device which multiplexes and transmits the transport stream packets of program data consisting of a plurality of data elements constructed in the form of transport stream packets. By generating a scramble key Ks corresponding to one or more data elements among the plurality of data elements constituting a program and by scrambling each data element, an audience can subscribe for each data element.

US 2003/053476 discloses an architecture for providing high-speed access over frequency-division multiplexed (FDM) channels allowing transmission of ethernet frames and/or other data across a cable transmission network or other form of FDM transport. The architecture involves downstream and upstream FDM multiplexing techniques to allow contemporaneous, parallel communications across a plurality of frequency channels, wherein each downstream data flow is fragmented into individual octets that are multiplexed into MPEG packets. The MPEG packets may be frequency-division multiplexed across and may be contemporaneously communicated over a plurality of frequency channels. Also, the octets from a data flow do not necessarily have to use consecutive octets in an MPEG packet. Instead, consecutive octets in an MPEG packet may carry information for two different data flows.

### SUMMARY

This invention is to provide a method for program components multiplexing and identification, in order to address the problems mentioned above and therefore to improve the efficiency of transmission and program component identification.

The present invention is realized as follows:
A method for program components multiplexing and identification, which is carried out between a multiplexer and a de-multiplexer, the method comprising:
   The multiplexer generates a sequence of transport packets and associated program elements information table (PEIT). The PEIT provides basic information that is essential for program component identification and de-multiplexing, and indicates the position of the respective program components within the sequence of transport packets. The position relationship can be determined based on the order of the respective program components and the counter information. The header field of the transport packet, which bears the PEIT comprises a PEIT indicator.

The de-multiplexer locates the PEIT transport packets by the PEIT indicator, identifies and extracts corresponding program components based on the position information of the program component provided in the PEIT transport packet. The de-multiplexer utilizes the program element identifier (PEID) corresponding to the program specific information (PSI) as the indicator, along with position information of the PEID within the PEIT, to search for the required PSI transport packet from the PEIT sequence. The de-multiplexer parses the PSI information to acquire the complete program structure of the elementary stream, such as audio and video, of the program. Based on the program structure, the de-multiplexer utilizes the PEID corresponding to the program elementary streams as the indicator, along with position information of the PEID within the PEIT, to search for the required elementary stream transport packet from the PEIT sequence and passes them to the corresponding elementary stream processor for further processing.

As to the method for program components multiplexing and identification, the multiplexer periodically places the collected transport packets into a buffer, and counts for the transport packets according to the program components they belong to respectively, the obtained counter information is stored to corresponding registers.One or more transport packets with Program Element Information Tables (PEIT) describing the transport packets sequence in the buffer are inserted to the transport packets sequence outputted at the multiplexer.

As to the method for program components multiplexing and identification, the multiplexer periodically places the collected transport packets into a reorder buffer. The transport packets in the buffer are reordered according to a predetermined rule, and the programs components are counted respectively after reordering the packets. The acquired counter information are stored into the registers orderly.

As to the method for program components multiplexing and identification, each PEIT interval corresponds to a PEIT.

As to the method for program components multiplexing and identification, the PEIT is placed previous to the corresponding PEIT interval.

As to the method for program components multiplexing and identification, the content described by the PEIT includes the distance in packet number between a PEIT and the corresponding PEIT interval, total number of the packets contained within the PEIT interval, the number of the consecutive packets of the same program component, PEID and other information.

As to the method for program components multiplexing and identification, the multiplexer employs a Packet Link Table (PLT) to correct errors, and the identification of a packet's position is achieved by the introduction of PEIT and transport packet sequence number. The multiplexer associates the information of the anchor packet (AP) with the linked packet (LP) that has the same program component. Multiplexer sets PLT to update the position information of AP, and writes it into the header field of LP. In case there are errors or loss in PEIT, the multiplexer can identify the program component of LP by searching within the reconstructed PLT.

The PLT can be realized as one LP is linked to one AP, or one LP is linked to multiple APs.

As to the method for program components multiplexing and identification, the multiplexing stream has two multiplexing modes, in which the basic mode implements PEIT, and the advanced mode includes a PLT and packet locating technique in addition to PEIT. The choice of the multiplexing mode is signaled by setting an advance mode enable flag to a syntax field in PEIT table.

The present invention has the following features:
The present invention multiplexes PEIT intervals into the multiplex signals or streams. The de-multiplexer extracts the PEIT from multiplexing signals or streams and identifies the packets belonging to PSI and individual elementary streams based on the information contained within PEIT. Hence, the present invention is faster, and more efficient than the conventional technique that works with the programmable match filters.
The present invention presents a method of PLT, which enables the receiver to correctly identify and extract the packets in the PEIT intervals when errors or loss occur to the program element information table.

### BRIEF DESCRIPTION OF DRAWINGS

Figure 1 is the flowchart of the reordering process according to the first embodiment, wherein the upper part of the arrow is the input transport packet sequence, while the lower part shows the resulted sequence after the reordering.
Figure 2 is a sample PEIT table structure in according to the first embodiment.
Figure 3 is the flow chart of the in_advance placement of PEIT in the first embodiment.
Figure 4 is the de-multiplexing process of the first embodiment.
Figure 5 is a schematic view of error correction using the linking mechanism with PLT technique according to the second embodiment.

### DETAILED DESCRIPTION OF THE PREFERRED EMBODIMENTS

A method for program components multiplexing and identification, which is realized between a multiplexer and a de-multiplexer, the method comprises the following steps:
The multiplexer generates a sequence of transport packets and associated program elements information table (PEIT). The PEIT provides basic information that is essential for program component identification and de-multiplexing, and indicates the position of the respective program components within the sequence of transport packets. The position relationship can be determined based on the order of the respective program components and the counter information. The header field of the transport packet, which bears the PEIT comprises a PEIT indicator.
The de-multiplexer locates the PEIT transport packets by the PEIT indicator, identifies and extracts corresponding program components based on the position information of the program component provided in the PEIT transport packet. The de-multiplexer utilizes the program element identifier (PEID) corresponding to the program specific information (PSI) as the indicator, along with position information of the PEID within the PEIT, to search for the required PSI transport packet from the PEIT sequence. The de-multiplexer parses the PSI information to acquire the complete program structure of the elementary stream, such as audio and video, of the program. Based on the program structure, the de-multiplexer utilizes the PEID corresponding to the program elementary streams as the indicator, along with position information of the PEID within the PEIT, to search for the required elementary stream transport packet from the PEIT sequence and passes them to the corresponding elementary stream processor for further processing.

Then detailed description of the present invention is exemplified by the embodiments: to optimize the transport efficiency in different transmission conditions, this invention presents two multiplexing modes (two embodiments), that is, basic mode and advanced mode. The choice of the multiplexing modes is signaled by setting an advance mode enable flag to a syntax field in PEIT table. The basic mode applies to the low error rate and transport channel where packets is supposed to arrive in sequence, such as digital cable television broadcast channel, whereas the advanced mode applies to the high packet loss ratio or high error rate, and the transport channel where the packets are likely to arrive out-of-order, such as IPTV network, and mobile TV channel. In the real embodiments, the transmission stream is used in the example, and the same methodology applies to the program stream.

### Embodiment 1 (basic mode)

### 1. The multiplexing process of the basic mode

The multiplexer periodically places the collected transport packets into a buffer, and counts for the transport packets according to the program components they belong to respectively, the obtained counter information is stored to corresponding registers. One or more transport packets with Program Element Information Tables (PEIT) describing the transport packets sequence in the buffer are inserted to the transport packets sequence outputted at the multiplexer.

The multiplexer may choose to reorder the arriving TP sequence, and in such manner, it reduces the size of PEIT. For example: originally, when 100 video packets and 101 audio packets are inserted into the buffer, PEIT requires 201 entries. However, reordering can compress PEIT into 2 entries, thus reducing the required transmission bandwidth. In this case, the multiplexer sets a reorder buffer. The reorder receives transport packets from the signal source and reorder the packets according to the selected program component. The signal source can directly comes from a real time encoder, such as audio or video encoder, or can be multiplexed transmission streams. The reorder buffer has a counter for counting the number of the packets passed into the buffer, so as to ensure the storage of a predetermined number of packets. The counter counts for the transport packets with the same type of the same program and the same program component, and records the corresponding counting information. The order of the program component of the transport packets sequence obtained after reordering complies with the predetermined order. Expect for a maximum compression of the space in PEIT for describing the reordered sequence, other suggested reordering process constraints are:
(1) Reordering process should conform to the system target decoder (STD) constraints such that it neither overflow, nor underflow receiver decoder buffers.
(2) The original temporal relationship between transport packets of the same program element type shall be maintained during reordering process.
(3) The upper bound of jittering associated with the reordered multiplex shall be less than 5ms.

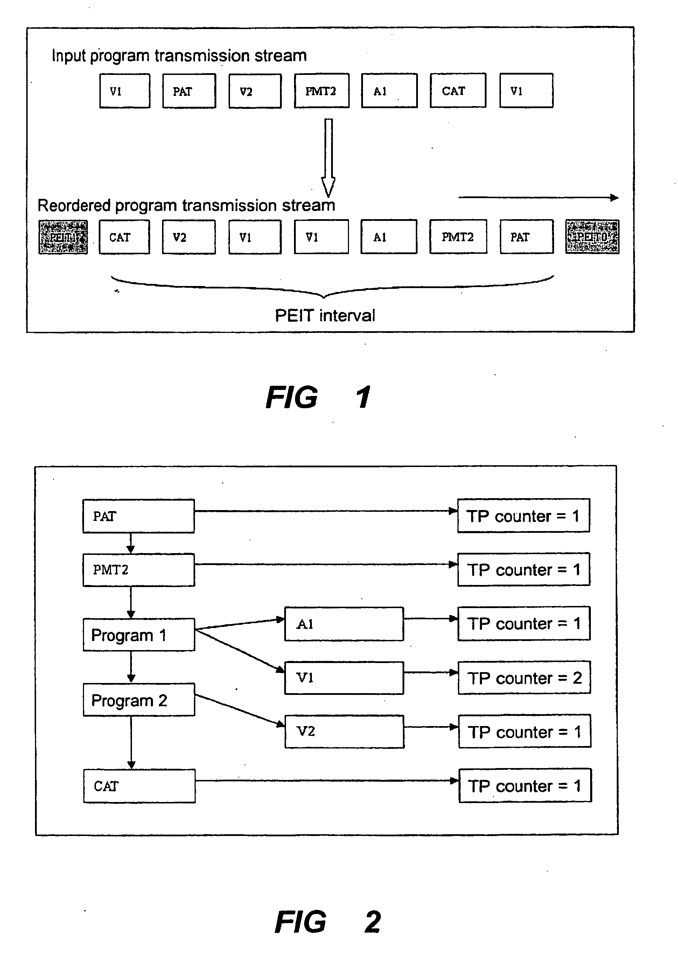

Figure 1 shows a reordering process. As indicated in the figure, the input is a transport packet sequence that needs to be reordered, which includes a program associate table (PAT) packet, a program map table (PMT) packet for program 2, a conditional access table (CAT) packet, a video packet (V1) and audio packet (A1) for program 1 and a video packet (V2) for program 2. As shown in the figure, after the reordering, program 1 and program 2 are ordered sequentially according to their program numbers, and the audio and video packets in each program are ordered according to the specified ordering rule. It shall be noted that the choice of ordering rule is quite flexible.

The multiplexer sets a selected program component order in the PEIT. Once the ordering rule is chosen, then the table structure of PEIT, such as the order of the programs and program components in the table is deterministic. The structure of the PEIT 0 after reordering (corresponding to the transmission stream of Figure 1) is shown in Figure 2.

The output sequence of the reordering process is called PEIT sequence, while the transport packet sequence described by a single PEIT is called a PEIT interval. Note that, each PEIT interval maps to a PEIT table, but this does not preclude the case that a single PEIT table can map to multiple PEIT intervals.

The length of a PEIT interval is determined by the multiplexer based on the specific application scenario. The PEIT interval length can be either fixed or variable. However, a fixed PEIT interval length is suggested. While putting input transport packets to specified order, multiplexer also keeps track of numerical counts of transport packets that have the same program element (or equivalently, elementary stream) type. As illustrated in Figure 2, this count is written into the "leaf' of PEIT composite tree that corresponds to the program component.

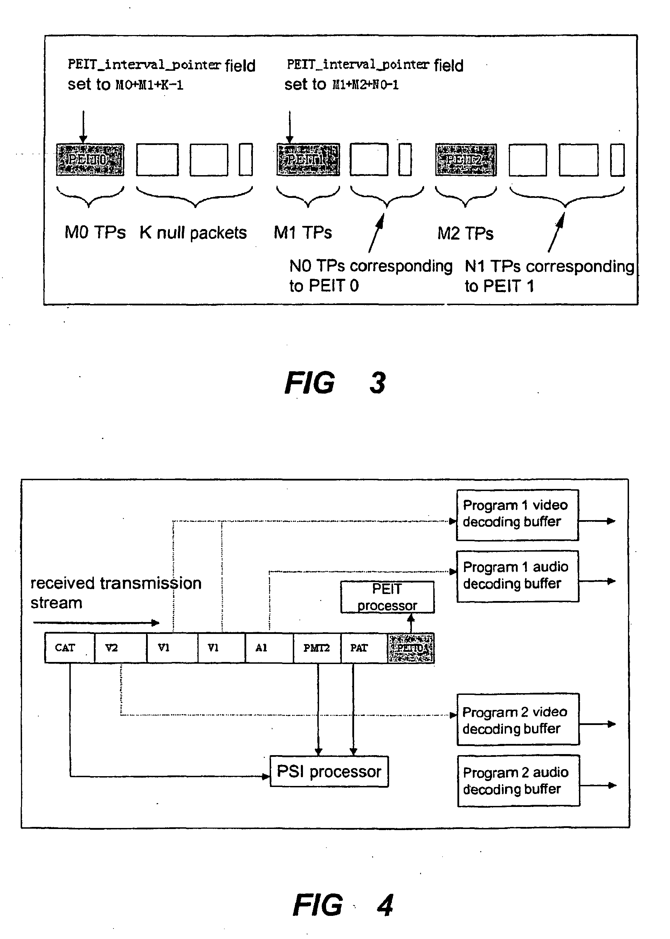

The completed PEIT table is inserted in front of the PEIT interval. The header of the TP that carries a PEIT includes a PEIT_indicator. The exact location of a PEIT need not be adjacent to the PEIT interval that it describes. For ease of implementation, typically, a PEIT shall be placed one interval in front of the associated PEIT interval. In this way, the receiver could have sufficient response time to parse the PEIT table before the first packet within the described PEIT interval arrives. Receiver obtains the starting position of a PEIT interval through a syntax field in the PEIT table. This syntax field is the PEIT_interval_pointer, which indicates the distance in transport packet number between the first TP of a PEIT and the first TP of the corresponding PEIT interval. As indicated in Figure 3, PEIT0 and PEIT1 are packetized into PEIT sections and then further encapsulated into M0 and M1 transport packets, respectively. Also, the respective PEIT interval for PEIT0 and PEIT1 has a length of N0 and N1 TPs, respectively. Following steps show a method with which a multiplexer could generate a PEIT sequence with correct positioning of PEIT and PEIT intervals. First, the multiplexer inserts K empty packets into PEIT0 and set the field of PEIT_interval_pointer with a value of M0+M1+K-1; Then, the N0 packets belonging to PEIT0 interval is added after PEIT1; Likewise, the N1 packets belonging to PEIT1 interval is inserted after PEIT2.

The transmission interval between consecutive PEITs should not be greater than the PAT transmission interval. Due to reordering process, a delay is typically introduced to multiplexer. The reorder buffer size should be set to max{PEIT_interval_size(n)} in order to minimize the multiplex jittering. For a constant PEIT interval size, the transmission delay is also constant at multiplexer. Assuming that availability information of each ES in PEIT table is indicated with an 8-bit number, this suggests that the maximum interval size is 255 TP counts.

PEIT interval size, reordering delay, and transmission overhead could be traded off. A smaller PEIT interval implies less reordering delay with a larger transmission overhead. Reorder delay for a transport multiplex of 20Mbps with a PEIT interval of 255 packets is around 18 ms. If the bytes needed for a PEIT is bigger than the size of TP, then multiple TPs are needed to carry the PEIT.

### 2. The De-multiplexing process of the basic mode

### 2.1 Search of program entry point

The entries contained within PEIT include PSI information such as PAT, PMT, CAT, NIT and TSDT, as well as the information on all other program components. There are a unique PEID (an integer that identifies the program element or component contained within a transport multiplex) associated with each entry. By searching for a PEID already known to the receiver, the position of corresponding program component could be obtained within PEIT. Note that PEID for PAT, CAT, TSDT is pre-defined.

The receiver will first locate PEIT section packet based on a unique PEIT indicator. After find the PEIT table, the receiver locates and parses PAT.. Since PAT has a predefined PEID of 0x0000, the receiver uses 0x0000 as a search symbol to search within PEIT for the position of the transport packets that contains PAT. A complete PAT is reconstructed by one or more TPs.

In order to obtain the elementary stream list of the programs, for example, audio and video, the receiver needs to search for PMT. Specifically, the de-multiplexer utilizes the Program_map_PEID (the PEID for the PMT), which is obtained from PAT, to search within the PEIT for the position of the transport packets that contains PMT. A complete PMT is reconstructed by one or more TPs. Likewise, packets with program element types like CAT could be searched with a CAT_PEID.

Through the above process, the receiver can construct a complete program component identification system for the transmission stream from the Program_map_PEID corresponding to the program numbers, the Elementary_PEID corresponding to the program components within the programs, and the PEID of other required program component types.

### 2.2 Program component identification procedure

After the constitution of a complete program component identification system of the transmission stream, the de-multiplexer side can identify all the program components of the TP sequence. Suppose the receiver receives the transportation stream as demonstrated by Figure 4. In order to simplify the de-multiplexing process, one assumption is made that there is no PEIT and TP loss in the transport. Basic mode is considered in the following example.

As demonstrated in Figure 4, the de-multiplexer parses the PEIT table after receiving the first PEIT PEIT0. Parsed PEIT0 indicates that, in the PEIT0 interval, the first two TP packets belong to PAT and PMT table of Program 2. The de-multiplexer sends the two TP to PSI processor and performs the construction or updates of the PAT and PMT. Then the receiver receives 4 TP packets. The PEIT table indicates that in the Program 1 the count of the audio packets is 1, while video packet is 2. Therefore, the de-multiplexer sends them to the audio decoding buffer and video decoding buffer respectively. Then the de-multiplexer sends V2 to the video decoding buffer of Program 2. Finally, CAT TP is sent to PSI processor to extract conditional access information.

### Embodiment 2 (Advanced mode)

### 3. The multiplexing process of the advanced mode

Advanced mode includes a packet locating technique that identifies packet's location by a sequence number pair (PEIT_Seq_Num, TP_Seq_Num), among which, PEIT_Seq_Num is the sequence number of PEIT while TP_Seq_Num is the sequence number of TP within a PEIT interval. Suppose both PEIT_Seq_Num and TP_Seq_Num counts from 0, then the fifth TP of the second PEIT in advanced mode has a position of (1,4). PEIT_Seq_Num shall be reset to 0 when reaches the maximum value that can be expressed by the number of the bits. The maximum length of a PEIT interval is no more that 255. The sequence number information can be transmitted within a adapted field.

In the de-multiplexing process at the de-multiplexer, the PEIT information table may be unusable due to packet loss of transmission channels. Furthermore, it is also desired to realize random access to multiplex stream and channel switch with low latency.Thus, the following concepts are introduced: Anchor Packet (AP), Linked Packet (LP), and Packet Link Table (PLT). PLT provides linking mechanism between LP and AP of the same type that's located in a previous PEIT interval. Multiplexer uses a PLT table to dynamically update position information of AP, which is then written into private data header field of LP. In case a PEIT table is not available due to packet loss, de-multiplexer side could search within reconstructed PLT table to identify linked transport packets.

In this embodiment, the multiplexer selects AP and sets a flag to the consecutive outputted PEIT sequence. For each program element type available in each PEIT interval, the multiplexer may choose one transport packet belonging to this program element type as anchor packet (usually the first-appeared packet, while other packets are also available), set anchor TP flag in private data field of this packet and write position of this anchor TP into PLT. Meanwhile, the system detects the program component TP received in the PEIT intervals after said PEIT interval. When the TP for the same program component appears again, the updated position information of AP is extracted from the PLT and written into the header of said TP. It should be noticed that, for the purpose of increasing the robust, all of the TPs in the PEIT interval shall be written with the corresponding AP position information. Additionally, since AP does not know where the next TP of the same program component will appear, the latency performance of the multiplexer will not be affected by this mechanism.

### 4. De-multiplexing process of advanced mode

The de-multiplexing process of advanced mode adds the function of PLT parsing and error correction based on the de-multiplexing process of basic mode. The de-multiplexer checks the header adapted field of each received TP. If the anchor_flag shows that the TP is an AP, the position information (including PEIT_Seq_num and TP_seq_num) of the TP will be written into the entry corresponding to the TP program component in the PLT. It should be noticed that the writing procedure is dynamic, that means, each time the AP of the same program component is received, the corresponding entry will be updated.

De-multiplexer extracts position of transport packet that's labeled as an AP contained within a PEIT interval with valid PEIT table and write it into the PLT for further uses. If at a certain de-multiplexing point, the PEIT, which describes a PEIT interval is lost, de-multiplexer shall initialize PLT recovery system by searching for the entry in PLT that contains the same AP position as that contained in header of linked packet. If a match is found, then, the de-multiplexer can use the corresponding identity of the AP for the LP contained within the PEIT interval.

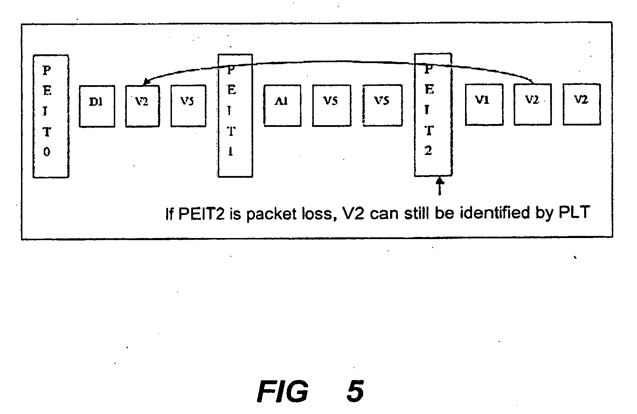

As indicated in Figure 5, assume each PEIT interval has advanced mode enabled and suppose that V2 at (2,1) is a LP and that at (0,1) is an AP. Since the adaptation field of TP (2,1) includes a data field that indicates the position of its AP is (0,1), Thus, if error occurs to PEIT2, (2,1) could be identified based on the program element type of (0,1), which is already known through PLT.

Figure 5 shows the case of one-to-one linking. In practice, multiple linking can also be implemented. In fact, PEIT could uses a syntax field called num_of_anchors to indicate the number of AP for the LP located within current PEIT interval.

### Following describes the choice of modes in details:

Due to the various network condition, the error rate also varies. In addition, for a network such as IPTV where Quality of Service could not be guaranteed, out-of-order packet arrival could also take place. Therefore, two different modes is designed, which apply to different network conditions.

In basic mode, the TPs in the PEIT intervals do no need any positioning information such as sequence number, thus the transmission bandwidths is greatly reserved. In basic mode, the positioning of the program component is based on the relative potision of the TPs and the PEIT. Digital terrestrial TV broadcasting could use basic mode due to its low bit error rate. It should be noted that sometimes, empty packets are inserted to match the target bit rate for digital video broadcasting. In this case, the description information of these NULL packets (i.e. packet count) should be added to the PEIT as a special entry.

Advanced mode includes an effective error resilience tool set (PLT and sequence numbering) and therefore is suitable for channels with high error rate.

Each PEIT interval can choose its own mode, which significantly improves the flexibility of the system design. This is done by setting an advanced_mode_enable flag in the PEIT. If advanced mode is enabled, then the PEIT should include a PEIT sequence number and there should be at least one AP or LP contained within the PEIT interval. Each AP/LP bears an adaptation field which includes an AP and/or LP flag and sequence numbers for the mentioned AP/LP. PEIT sequence number needs to only increment with the PEIT intervals that has advanced mode enabled. Also, only AP/LP needs to bear a sequence number. For example, if a certain PEIT interval has one AP/LP only, then all other TP don't need to have a sequence number.

While the invention has been shown and described with reference to certain preferred embodiments thereof, it will be understood by those skilled in the art that various changes in form and details may be made therein without departing from the scope of the invention as defined by the appended claims.

## Claims

1. A method for program elements multiplexing, de-multiplexing and identification, which is carried out between a multiplexer and a de-multiplexer, wherein the program elements include elementary streams and program specific information, PSI, sections, the method comprising:
at the multiplexer, generating a sequence of transport packets and one or more associated program elements information tables, PEIT, each contained in one or more PEIT transport packets; the sequence of transport packets including multiple PEIT intervals with each PEIT interval corresponding to a single PEIT and comprising a sub-sequence of transport packets; each PEIT contains a list of data entries for describing position relationship of all contained program elements in at least one corresponding PEIT interval, each data entry includes counter information and a unique program element identifier, PEID, for the corresponding program element;
wherein the position relationship can be determined based on the order of the respective data entries for program elements and the counter information, wherein the counter information represents the count of consecutive packets of the same type of program element; and wherein the header field of the PEIT transport packet which bears the PEIT comprises a PEIT indicator;
at the de-multiplexer, locating the PEIT transport packets by the PEIT indicator, identifying and extracting corresponding program elements based on the position information of the program element provided in the PEIT transport packet;
utilizing the program element identifier, PEID, corresponding to the program specific information, PSI, as an indicator, along with position information of the entry for the program element associated with the PEID within the PEIT, to search for the required PSI transport packet from the sequence of transport packets;
parsing the PSI information to acquire the complete program structure of the elementary stream, of the program;
based on the program structure, utilizing the PEID corresponding to the elementary streams as an indicator, along with position information of the entry for the program element associated with the PEID within the PEIT, to search for the required transport packet containing elementary stream from the sequence of transport packets and passing them to the corresponding elementary stream processor for further processing;
wherein the PEIT includes a distance information between a PEIT and the at least one corresponding PEIT interval.

2. The method of claim 1, wherein at the multiplexer, the collected transport packets are periodically placed into a buffer, and the transport packets are counted for according to the program elements they belong to respectively, and the obtained counter information is stored to corresponding registers; wherein one or more transport packets with Program Element Information Tables, PEIT, describing the transport packets sequence in the buffer are inserted to the transport packets sequence outputted at the multiplexer.

3. The method of claim 1, wherein at the multiplexer, the collected transport packets are periodically placed into a reorder buffer, the transport packets in the buffer is reordered according to a predetermined rule, and the acquired counter information are stored into the registers orderly.

4. The method of claim 1, wherein each PEIT interval corresponds to a PEIT.

5. The method of claim 1 or 4, wherein the PEIT is placed previous to the corresponding PEIT interval.

6. The method of claim 1, wherein the distance information is the distance in packet number between a PEIT and the corresponding PEIT interval.

7. The method of any one of the claims 1 to 6, wherein the multiplexer employs a Packet Link Table, PLT, to correct errors, and the identification of a packet's position is achieved by the introduction of PEIT and transport packet sequence number; the multiplexer associates the information of the anchor packet, AP, with the linked packet, LP, that has the same program element, the multiplexer sets PLT to update the position information of AP, and writes it into the header field of LP; in case there are errors or loss in PEIT, the multiplexer can identify the program element of LP by searching within the reconstructed PLT.

8. The method of claim 7, wherein the PLT can be realized as one LP is linked to one AP, or one LP is linked to multiple APs.

9. The method of claim 7, wherein the multiplexing stream has two multiplexing modes, in which the basic mode implements PEIT, and the advanced mode includes a PLT and packet locating technique in addition to PEIT, the choice of the multiplexing mode is signalled by setting an advance mode enable flag to a syntax field in PEIT table.

## Patentansprüche

1. Verfahren zum Multiplexen, Demultiplexen und Identifizieren von Programmelementen, welches zwischen einem Multiplexer und einem Demultiplexer ausgeführt wird, wobei die Programmelemente elementare Ströme und programmspezifische Informations, PSI,-Abschnitte umfassen, wobei das Verfahren aufweist:
an dem Multiplexer, Erzeugen einer Sequenz von Transportpaketen und ein oder mehreren assoziierten Programmelemente-Informationstabellen, PEIT, wobei jedes in einem oder mehreren PEIT-Transportpaketen enthalten ist; wobei die Sequenz von Transportpaketen mehrere PEIT-Intervalle umfasst, wobei jedes PEIT-Intervall einem einzelnen PEIT entspricht und eine Subsequenz von Transportpaketen aufweist; wobei jedes PEIT eine Liste von Dateneinträgen enthält zum Beschreiben einer Positionsbeziehung aller enthaltener Programmelemente in zumindest einem entsprechenden PEIT-Intervall, wobei jeder Dateneintrag Zählerinformationen und einen eindeutigen Programmelementbezeichner, PEID, für das entsprechende Programmelement umfasst;
wobei die Positionsbeziehung bestimmt werden kann basierend auf der Reihenfolge der jeweiligen Dateneinträge für die Programmelemente und die Zählerinformationen, wobei die Zählerinformationen die Zahl von aufeinanderfolgenden Paketen des gleichen Typs von Programmelementen repräsentieren; und wobei das Header-Feld des PEIT-Transportpakets, welches das PEIT trägt, einen PEIT-Indikator aufweist;
an dem Demultiplexer, Orten der PEIT-Transportpakete durch den PEIT-Indikator, Identifizieren und Extrahieren entsprechender Programmelemente basierend auf den Positionsinformationen des Programmelements, welches in dem PEIT-Transportpaket bereitgestellt wird;
Verwenden des Programmelementbezeichners, PEID, entsprechend den programmspezifischen Informationen, PSI, als einen Indikator zusammen mit den Positionsinformationen des Eintrags für das Programmelement, welches mit dem PEID innerhalb des PEIT assoziiert wird, um nach dem erforderlichen PSI-Transportpaket aus der Sequenz von Transportpaketen zu suchen;
Parsen der PSI-Informationen, um die komplette Programmstruktur des elementaren Stroms des Programms zu erfassen;
basierend auf der Programmstruktur, Verwenden des PEID entsprechend den elementaren Strömen als einen Indikator zusammen mit den Positionsinformationen des Eintrags für das Programmelement, welche mit der PEID innerhalb des PEIT assoziiert werden, um nach dem erforderlichen Transportpaket zu suchen, welches den elementaren Strom aus der Sequenz von Transportpaketen enthält, und Übergeben dieser an den entsprechenden elementaren Stromprozessor zur weiteren Verarbeitung;
wobei das PEIT eine Abstandsinformation zwischen einem PEIT und dem zumindest einen entsprechenden PEIT-Intervall umfasst.

2. Verfahren nach Anspruch 1, wobei an dem Multiplexer die gesammelten Transportpakete periodisch in einem Puffer platziert werden, und die Transportpakete entsprechend den Programmelementen, zu denen sie jeweils gehören, gezählt werden, und die erhaltenen Zählerinformationen in entsprechenden Registern gespeichert werden; wobei ein oder mehrere Transportpakete mit Programmelementinformationstabellen, PEIT, welche die Transportpaketsequenz in dem Puffer beschreibt, in die Transportpaketsequenz eingefügt werden, welche an den Multiplexer ausgegeben wird.

3. Verfahren nach Anspruch 1, wobei an dem Multiplexer die gesammelten Transportpakete periodisch in einem Neuordnungspuffer platziert werden, wobei die Transportpakete in dem Puffer gemäß einer vorbestimmten Regel neu geordnet werden, und die erfassten Zählerinformationen in den Registern der Reihe nach gespeichert werden.

4. Verfahren nach Anspruch 1, wobei jedes PEIT-Intervall einem PEIT entspricht.

5. Verfahren nach Anspruch 1 oder 4, wobei das PEIT vor das entsprechende PEIT-Intervall platziert wird.

6. Verfahren nach Anspruch 1, wobei die Abstandsinformation der Abstand in der Paketnummer zwischen einem PEIT und dem entsprechenden PEIT-Intervall ist.

7. Verfahren nach einem der Ansprüche 1 bis 6, wobei der Multiplexer eine Paketverbindungstabelle, PLT, verwendet, um Fehler zu korrigieren, und wobei die Identifizierung einer Paketposition durch die Einführung des PEIT und der Transportpaketsequenznummer erreicht wird; wobei der Multiplexer die Informationen des Ankerpakets, AP, mit dem verbundenen Paket, LP, assoziiert, welches das gleiche Programmelement aufweist, wobei der Multiplexer den PLT setzt, um die Positionsinformationen des AP zu aktualisieren und sie in das Header-Feld des LP zu schreiben; für den Fall, dass es Fehler oder Verluste in dem PEIT gibt, kann der Multiplexer das Programmelement des LP identifizieren durch Suchen innerhalb des rekonstruierten PLT.

8. Verfahren nach Anspruch 7, wobei der PLT realisiert werden kann als ein LP, der mit einem AP verbunden ist, oder ein LP, welcher mit mehreren APs verbunden ist.

9. Verfahren nach Anspruch 7, wobei der Multiplexstrom zwei Multiplexmodi aufweist, in welchen der Basismodus das PEIT implementiert, und der fortgeschrittene Modus ein PLT und eine Paketortungstechnik zusätzlich zum PEIT umfasst, wobei die Wahl des Multiplexmodus signalisiert wird durch Setzen eines fortgeschrittenen Modusaktivierungsflags in einem Syntaxfeld in der PEIT-Tabelle.

## Revendications

1. Un procédé de multiplexage, de démultiplexage et d'identification d'éléments de programme, qui est mis en oeuvre entre un multiplexeur et un démultiplexeur, les éléments de programme comprenant des flux élémentaires et des sections d'informations spécifiques au programme, PSI, le procédé comprenant:
au niveau du multiplexeur, la génération d'une séquence de paquets de transport et d'une ou plusieurs tables d'informations d'éléments de programme associés, PEIT, chacune contenue dans un ou plusieurs paquets de transport PEIT; la séquence de paquets de transport comprenant des intervalles de PEIT multiples avec chaque intervalle de PEIT correspondant à une PEIT unique et comprenant une sous-séquence de paquets de transport ; chaque PEIT contenant une liste de rubriques de données pour décrire une relation de position de tous les éléments de programme contenus dans au moins un intervalle de PEIT correspondant, chaque rubrique de données comprenant une information de compteur et un identifiant d'élément de programme unique, PEID, pour l'élément de programme correspondant;
dans lequel la relation de position peut être déterminée en fonction de l'ordre des rubriques de données respectives pour les éléments de programme et de l'information de compteur, l'information de compteur représentant le compte des paquets consécutifs du même type d'élément de programme ; et dans lequel le champ d'en-tête du paquet de transport PEIT qui porte la PEIT comprend un indicateur de PEIT;
par le démultiplexeur, la localisation des paquets de transport PEIT par l'indicateur de PEIT, l'identification et l'extraction des éléments de programme correspondants en fonction de l'information de position de l'élément de programme fourni par le paquet de transport PEIT;
l'utilisation de l'identifiant de l'élément de programme, PEID, correspondant aux informations spécifiques au programme, PSI, en tant qu'indicateur, avec une information de position de la rubrique pour l'élément de programme associé au PEID au sein de la PEIT, pour rechercher le paquet de transport PSI requis parmi la séquence de paquets de transport;
l'analyse syntaxique des informations PSI pour acquérir la structure de programme complète du flux élémentaire du programme;
en fonction de la structure du programme, l'utilisation du PEID correspondant aux flux élémentaires en tant qu'indicateur, avec une information de position de la rubrique pour l'élément de programme associé au PEID au sein de la PEIT, pour rechercher le paquet de transport requis contenant le flux élémentaire parmi la séquence de paquets de transport et les transférer au processeur de flux élémentaire correspondant pour traitement ultérieur;
dans lequel la PEIT comprend une information de distance entre une PEIT et le au moins un intervalle de PEIT correspondant.

2. Le procédé de la revendication 1, dans lequel au niveau du multiplexeur les paquets de transport recueillis sont placés périodiquement dans un tampon, et les paquets de transport sont comptés en fonction des éléments de programme auxquels ils appartiennent respectivement, et l'information de compteur obtenue est mémorisée dans des registres correspondants ; dans lequel un ou plusieurs paquets de transport avec des tables d'informations d'éléments de programme, PEIT, décrivant la séquence de paquets de transport dans le tampon sont insérés dans la séquence de paquets de transport délivrés en sortie par le multiplexeur.

3. Le procédé de la revendication 1, dans lequel au niveau du multiplexeur les paquets de transport recueillis sont placés périodiquement dans un tampon de reclassement, les paquets de transport du tampon étant reclassés en fonction d'une règle prédéterminée, et l'information de compteur acquise étant mémorisée dans des registres selon ce classement.

4. Le procédé de la revendication 1, dans lequel chaque intervalle de PEIT correspond à une PEIT.

5. Le procédé de la revendication 1 ou 4, dans lequel la PEIT est placée avant l'intervalle de PEIT correspondant.

6. Le procédé de la revendication 1, dans lequel l'information de distance est la distance en nombre de paquets entre une PEIT et l'intervalle de PEIT correspondant.

7. Le procédé de l'une des revendications 1 à 6, dans lequel : le multiplexeur utilise une table de rattachement de paquets, PLT, pour corriger les erreurs, et l'identification de la position d'un paquet est obtenue par l'introduction de la PEIT et d'un numéro de séquence du paquet de transport ; le multiplexeur associe l'information du paquet de rattachement, AP, au paquet rattaché, LP, qui possède le même élément de programme, le multiplexeur établit la PLT pour mettre à jour l'information de position du AP, et l'inscrit dans le champ d'en-tête du LP ; en cas d'erreurs ou de pertes de PEIT, le multiplexeur peut identifier l'élément de programme du LP par recherche au sein de la PLT reconstruite.

8. Le procédé de la revendication 7, dans lequel la PLT peut être constituée lorsqu'un LP est rattaché à un AP, ou un LP est rattaché à des AP multiples.

9. Le procédé de la revendication 7, dans lequel le flux de multiplexage possède deux modes de multiplexage dans lesquels le mode de base met en oeuvre la PEIT et le mode amélioré inclut une PLT et une technique de localisation des paquets outre la PEIT, le choix du mode de multiplexage étant signalé par le positionnement d'un drapeau d'activation préalable de mode vers un champ syntactique de la table PEIT.
